# FASCICULE DE BREVET EUROPEEN

(11) **EP 3 774 445 B1**
(45) Date de publication et mention de la délivrance du brevet: **06.12.2023**
(21) Numéro de dépôt: 19713532.0
(22) Date de dépôt: 08.03.2019
(51) Int. Cl.: B60N 3/04, B60N 3/06

(54) **AGENCEMENT D'UN TAPIS DE PLANCHER RECOUVERT PAR UNE GARNITURE POUR UN REPOSE PIED ET VEHICULE CORRESPONDANT**
ANORDNUNG EINER BODENMATTE, DIE VON EINER VERKLEIDUNG FÜR EINE FUSSSTÜTZE ABGEDECKT IST, UND ENTSPRECHENDES FAHRZEUG
ARRANGEMENT OF A FLOOR MAT COVERED BY A LINING FOR A FOOTREST, AND CORRESPONDING VEHICLE

(30) Priorité: 30.03.2018 FR 1852835
(43) Date de publication de la demande: 17.02.2021
(73) Titulaire: PSA Automobiles SA, 78300 Poissy (FR)
(72) Inventeur: DUFRESNE, André, 25200 Montbéliard (FR); TAVERNIER, Luc, 25470 Trévillers (FR); DONNADIEU, Frédéric, 25420 Bart (FR); CUNHA DA SILVA, Daniel, 91270 Vigneux Sur Seine (FR); VERGNENEGRE, Benjamin, 78180 Montigny Le Bretonneux (FR); VALTIER, Alain, 78770 Autouillet (FR); GALLERNE, Jean Christophe, 78114 Magny Les Hameaux (FR); VILLA, Laurent, 91460 Marcoussis (FR)
(86) Numéro de dépôt international: PCT/FR2019/050520
(87) Numéro de publication internationale: WO 2019/186009

(56) Documents cités:
- FR-A1- 2 746 726
- FR-A1- 2 986 754
- US-B1- 9 045 059

## Description

La présente invention concerne un tapis de plancher recouvert par une garniture de repose pied. Une zone du tapis de plancher est adaptée pour se conformer étroitement à la structure du repose pied recouvert par sa garniture.

Dans l'état de la technique, nous connaissons le document FR2986754 décrivant un ensemble pour la réception d'un talon d'un utilisateur d'un véhicule automobile et un repose-pied d'un habitacle de véhicule automobile, comprenant au moins une épaisseur de feutre acoustique reposant sur un plancher du véhicule, un élément de réception reposant sur ladite couche acoustique et comportant au moins une zone d'appui et de pivotement du talon, et un tapis recouvrant l'élément. L'élément de réception est constitué d'un boîtier creux comprenant au moins une paroi transversale arrière rigide, qui fait saillie par rapport à l'horizontale pour constituer la zone d'appui et de pivotement du talon de l'utilisateur et une paroi transversale horizontale fixée sur le plancher du véhicule et apte à se déformer en cas de choc. On constate que dans ce cas le tapis recouvre dans sa totalité le boîtier creux et n'est pas maintenu par une garniture. De ce fait, le tapis peut sous la pression du pied du conducteur se déchausser de son support prématurément.

Afin de remédier à cet inconvénient le tapis de plancher est conformé pour se positionner solidairement sur la structure du repose pied puis recouvert par la garniture.

A cet effet, la présente invention a pour objet un agencement d'un tapis de plancher de véhicule destiné à s'intégrer partiellement à un repose pied, le tapis comportant une zone conformée pour épouser une structure formant un bloc ayant une forme sensiblement trapézoïdale suivant une direction perpendiculaire à la zone d'appui et, un profil triangulaire.

Avantageusement, la zone conformée du tapis comporte deux ouvertures aptes à se caler dans des surépaisseurs adaptées de la structure.

Selon une caractéristique avantageuse, les ouvertures entre elles définissent une languette.

Selon une variante, la languette vient s'arrimer étroitement dans une saignée transversale ménagée dans la structure.

Selon une autre variante, la languette vient s'arrimer étroitement dans une saignée transversale ménagée dans la structure.

Avantageusement, la structure comporte trois alvéoles de forme rectangulaires.

Selon une caractéristique, les alvéoles ne sont pas alignées sur la zone d'appui de la structure.

Selon une autre caractéristique, les alvéoles de la structure sont positionnées dans les ouvertures du tapis.

Avantageusement, les alvéoles de la structure réceptionnent des clips érigés sur la surface interne d'une garniture, la garniture enserrant et conformant le tapis sur la structure.

Par ailleurs, l'invention a également pour objet un véhicule comportant un agencement de tapis de plancher partiellement intégré à un repose pied, ayant les caractéristiques susmentionnées.

D'autres caractéristiques et avantages de l'invention apparaîtront clairement à la lecture de la description ci-après, donnée à titre indicatif en référence aux dessins annexés dans lesquels :
- La figure 1 est une vue en perspective de de dessus de la structure d'accueil du repose pied et de la partie de tapis le recouvrant, suivant l'invention ;
- La figure 2 est une vue en perspective de de dessus de la vue arrière en perspective de la structure d'accueil du repose pied avec la partie de tapis le recouvrant, suivant l'invention ;
- La figure 3 est une vue en perspective de de dessus de la structure d'accueil du repose pied avec la partie de tapis de dessus, recouvert par la garniture du repose pied suivant l'invention ;
- La figure 4 est une vue de profil en coupe A-A de la figure 3 du repose pied au niveau de l'ancrage de la bretelle du tapis visible sur la figure 2, suivant l'invention.

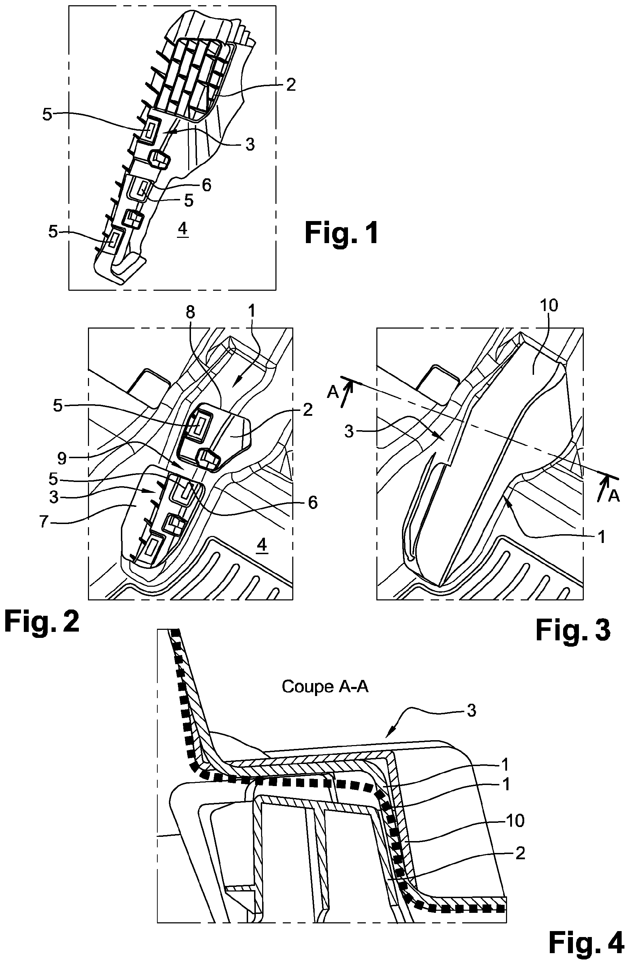

La figure 1 est une vue en perspective de dessus de la structure 2 d'accueil du repose pied 3 et de la partie de tapis 1 le recouvrant non visible sur la figure, suivant l'invention. En regardant en direction de la zone d'appui du pied du conducteur sur la structure 2, on voit qu'elle est de forme sensiblement trapézoïdale, et de profil triangulaire, elle forme un bloc suivant le mouvement du plancher 4 du véhicule. La structure 2 est réticulée pour offrir une bonne résistance à l'écrasement. La partie inférieure du bloc se réduisant en largeur comporte un certain nombres d'alvéoles 5. La partie médiane de la structure 2 comporte une saignée transversale 6 sur une profondeur superficielle.

La figure 2 est une vue en perspective de de dessus de la vue arrière en perspective structure 2 d'accueil du repose pied 3 avec la partie de tapis 1 recouvrant la structure 2, suivant l'invention. Le tapis 1 comporte des découpes créant des ouvertures 7, 8 au niveau de la structure 2. Les ouvertures 7, 8 permettre de créer une languette 9 qui vient s'engager étroitement dans la saignée transversale 6 de la structure 2. L'ouverture supérieure 8 est délimitée par un bloc tout en se prolongeant sur le côté de la structure 2. L'ouverture inférieure 7 est délimitée par le bloc de base sensiblement trapézoïdale et se prolonge légèrement sur le côté de la structure 2.

La figure 3 est une vue en perspective de de dessus de la structure 2 d'accueil non visible du repose pied 3 avec la partie de tapis 1 de dessus, recouvert par la garniture 10 du repose pied 3 suivant l'invention. Sur cette vue la structure 2 a été recouverte par le tapis 1, cet ensemble est intégralement recouvert par la garniture 10 du repose pied 3. Les alvéoles 5 de forme rectangulaires visibles sur les figures 1 et 2 permettent d'engager des clips venus de matière sur la surface interne de la garniture 10. Le clippage de la garniture 10 permet avantageusement de maintenir fermement le tapis 1.

La figure 4 est une vue de profil en coupe A-A de la figure 3 du repose pied 3 au niveau de l'ancrage de la bretelle du tapis 1 visible sur la figure 2, suivant l'invention. Sur la vue, on voit que le tapis 1 est placé sur la structure 2, puis à l'aide de la garniture 10, on vient coiffer le tapis 1 qui se conforme au profil de la garniture 10 comme cela est montré sur la vue en trait interrompus courts.

## Revendications

1. Agencement d'un tapis (1) de plancher de véhicule destiné à s'intégrer partiellement à un repose pied (3), **caractérisé en ce que** le tapis (1) comporte une zone conformée pour épouser une structure (2) formant un bloc ayant une forme sensiblement trapézoïdale suivant une direction perpendiculaire à la zone d'appui et, un profil triangulaire.

2. Agencement (1) selon la revendication 1, **caractérisé en ce que** la zone conformée du tapis (1) comporte deux ouvertures (7, 8) aptes à se caler dans des surépaisseurs adaptées de la structure (2).

3. Agencement (1) selon la revendication 2, **caractérisé en ce que** les ouvertures (7, 8) entre elles définissent une languette (9).

4. Agencement (1) selon la revendications 3, comprenant une structure (2) formant un bloc ayant une forme sensiblement trapézoïdale suivant une direction perpendiculaire à la zone d'appui et un profil triangulaire, la languette (9) s'arrimant étroitement dans une saignée transversale (6) ménagée dans la structure (2).

5. Agencement (1) selon la revendication 4, **caractérisé en ce que** la languette (9) possède des bords parallèles entre eux.

6. Agencement (1) selon la revendication 5, **caractérisé en ce que** la structure (2) comporte des alvéoles (5) positionnées dans les ouvertures (7,8) du tapis (1).

7. Agencement (1) selon la revendication 6, comportant une garniture (10), dont les alvéoles (5) de la structure (2) réceptionnent des clips érigés sur la surface interne de la garniture (10), la garniture (10) enserrant et conformant le tapis (1) sur la structure (2).

8. Véhicule automobile comportant un agencement de tapis de plancher partiellement intégré à un repose pied (3), selon l'une quelconque des revendications 1 à 7.

9. Véhicule automobile comportant un agencement de tapis de plancher partiellement intégré à un repose pied (3), selon l'une quelconque des revendications 1 à 9.

## Patentansprüche

1. Anordnung einer Fahrzeugbodenmatte (1), die dazu bestimmt ist, teilweise in eine Fußstütze (3) integriert zu werden, **dadurch gekennzeichnet, dass** die Matte (1) einen Bereich aufweist, der so ausgebildet ist, dass er sich einer Struktur (2) anpasst, die einen Block bildet, der eine im Wesentlichen trapezförmige Form in einer Richtung senkrecht zur Auflagezone und ein dreieckiges Profil aufweist.

2. Anordnung (1) nach Anspruch 1, **dadurch gekennzeichnet, dass** der geformte Bereich der Matte (1) zwei Öffnungen (7, 8) aufweist, die geeignet sind, sich in angepasste Verdickungen der Struktur (2) zu verkeilen.

3. Anordnung (1) nach Anspruch 2, **dadurch gekennzeichnet, dass** die Öffnungen (7, 8) dazwischen eine Zunge (9) definieren.

4. Anordnung (1) nach Anspruch 3, umfassend eine Blockstruktur (2), die eine im Wesentlichen trapezförmige Form in einer Richtung senkrecht zur Auflagezone und ein dreieckiges Profil aufweist, wobei die Zunge (9) eng in einen Querschnitt (6) in der Struktur (2) eingreift.

5. Anordnung (1) nach Anspruch 4, **dadurch gekennzeichnet, dass** die Zunge (9) zueinander parallele Ränder aufweist.

6. Anordnung (1) nach Anspruch 5, **dadurch gekennzeichnet, dass** die Struktur (2) Zellen (5) aufweist, die in den Öffnungen (7, 8) des Teppichs (1) positioniert sind.

7. Anordnung (1) nach Anspruch 6, mit einer Dichtung (10), deren Zellen (5) der Struktur (2) auf der Innenfläche der Dichtung (10) aufgestellte Clips aufnehmen, wobei die Dichtung (10) die Matte (1) auf der Struktur (2) umgreift und formt.

8. Kraftfahrzeug mit einer teilweise in eine Fußstütze (3) integrierten Bodenmattenanordnung nach einem der Ansprüche 1 bis 7.

9. Kraftfahrzeug mit einer teilweise in eine Fußstütze (3) integrierten Bodenmattenanordnung nach einem der Ansprüche 1 bis 9.

## Claims

1. Arrangement of a vehicle floor mat (1) intended to be partially integrated into a footrest (3), **characterized in that** the mat (1) comprises a zone shaped to follow a structure (2) forming a block having a substantially trapezoidal shape in a direction perpendicular to the bearing zone and a triangular profile.

2. Arrangement (1) according to claim 1, **characterized in that** the shaped zone of the belt (1) comprises two openings (7, 8) capable of being wedged in appropriate extra thicknesses of the structure (2).

3. Arrangement (1) according to claim 2, **characterized in that** the openings (7, 8) between them define a tongue (9) .

4. Arrangement (1) according to claim 3, comprising a structure (2) forming a block having a substantially trapezoidal shape in a direction perpendicular to the bearing zone and a triangular profile, the tongue (9) being closely anchored in a transverse groove (6) formed in the structure (2).

5. Arrangement (1) according to claim 4, **characterized in that** the tongue (9) has mutually parallel edges.

6. Arrangement (1) according to claim 5, **characterized in that** the structure (2) comprises cells (5) positioned in the openings (7, 8) of the belt (1).

7. Arrangement (1) according to claim 6, comprising a lining (10), the cells (5) of the structure (2) of which receive clips erected on the internal surface of the lining (10), the lining (10) gripping and shaping the belt (1) on the structure (2).

8. Motor vehicle comprising a floor mat arrangement partially integrated into a footrest (3), according to any one of claims 1 to 7.

9. Motor vehicle comprising a floor mat arrangement partially integrated into a footrest (3), according to any one of claims 1 to 9.
